(19) Europäisches Patentamt
European Patent Office
Office européen des brevets

(11) **EP 3 968 537 A1**

(12) **EUROPEAN PATENT APPLICATION**
published in accordance with Art. 153(4) EPC

(43) Date of publication:
**16.03.2022 Bulletin 2022/11**

(21) Application number: **20826791.4**

(22) Date of filing: **11.05.2020**

(51) International Patent Classification (IPC):
**H04B 7/06** (2006.01)

(52) Cooperative Patent Classification (CPC):
**H04B 7/06; H04B 7/08**

(86) International application number:
**PCT/CN2020/089640**

(87) International publication number:
**WO 2020/253419 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2019 CN 201910543199**

(71) Applicant: **ZTE Corporation**
**Shenzhen, Guangdong 518057 (CN)**

(72) Inventor: **DONG, Guangming**
**Shenzhen, Guangdong 518057 (CN)**

(74) Representative: **Raynor, Simon Mark**
**Murgitroyd & Company Milton Keynes**
**Altius House**
**1 North Fourth Street**
**Milton Keynes MK9 1DG (GB)**

(54) **METHOD AND DEVICE FOR REALIZING BEAMFORMING**

(57) Disclosed are a method and device for realizing beamforming. The method includes: acquiring a maximum channel capacity according to a number of subband resource blocks and a rank indication fed back by a terminal; and performing downlink beamforming according to a channel weight of an antenna corresponding to the maximum channel capacity.

**FIG. 1**

**Description**

**CROSS REFERENCE TO RELATED APPLICATIONS**

The present application claims priority to Chinese patent application No. 201910543199.5 filed on June 21, 2019, which is incorporated by reference herein in its entirety.

**TECHNICAL FIELD**

The present invention relates but not limited to the field of a next generation mobile communication technology, and in particular to a method and device for realizing beamforming.

**BACKGROUND**

In the new radio (NR) communication technology of the 5th generation mobile networks (5G), beamforming of a downlink traffic channel is a prime traffic technology that affects a user's downloading and data service experience. If transmission of channel sounding reference signals (SRSes) in turn/concurrently can be supported via multiple antennas at a terminal side, selection and pairing of spatial division streams can be performed at a base station side according to an uplink SRS measurement value.

In a related art, a method applied to a beamforming technology is to simply perform beamforming directly according to a sequence of ports, for example, to perform beamforming according to a port 0/1. However, because respective ports obtain varied SRS measurement values, this method of simply performing beamforming directly according to the sequence of the ports is not able to guarantee that an antenna acquires a maximum gain.

**SUMMARY**

The present invention provides a method and device for realizing beamforming.

The present invention provides a method for realizing beamforming including: acquiring a maximum channel capacity according to a number of subband resource blocks (RBs) and a rank indication (RI) fed back by a terminal; and performing downlink beamforming according to a channel weight of an antenna corresponding to the maximum channel capacity.

The present invention further provides a computer-readable storage medium storing a computer-executable instruction to perform the method for realizing beamforming according to any one of the above.

The present invention further provides a device for realizing beamforming. The device includes a processor and a memory. Herein, a computer program capable of running in the processor is stored in the memory to perform an operation of the method for realizing beamforming according to any one of the above.

The present invention further provides a device for realizing beamforming, including a processing module, an antenna selection module and a beamforming module. Herein, the processing module is configured to acquire a maximum channel capacity according to a number of RBs and an RI fed back by a terminal. The antenna selection module is configured to determine that an antenna corresponding to the maximum channel capacity is a beamforming antenna. The beamforming module is configured to perform downlink beamforming according to a channel weight of the antenna corresponding to the maximum channel capacity.

Other features and advantages of the present invention are described in the following content. In addition, some of the features and advantages are evident based on the present invention and are known through the present invention. The purpose and other advantages of the present invention may be realized and acquired through the structures particularly indicated in the specification, the Claims and the drawings.

**BRIEF DESCRIPTION OF THE DRAWINGS**

The drawings provide further understanding on the technical solution of the present invention, and form a part of the specification. The drawings and embodiments of the present invention mean to explain rather than to limit the technical solution of the present invention.

FIG. 1 is a schematic flowchart of a method for realizing beamforming;
FIG. 2 is a schematic diagram showing a structure of a device for realizing beamforming.

## DETAILED DESCRIPTION

In a typical configuration of the present invention, a computer device includes one or a plurality of processors (central processing units (CPUs)), input/output interfaces, network interfaces and memories.

A memory may include a volatile memory, a random access memory (RAM) and/or a nonvolatile memory in a computer-readable medium, such as a read-only memory (ROM) or a flash RAM. The memory is an example of a computer-readable medium.

The computer-readable medium includes a permanent, impermanent, movable and immovable medium that may implement information storage in any method or technology. The information may be a computer-readable instruction, a data structure, a module of a program or other data. An example of a storage medium of a computer includes but not limited to a phase-change RAM (PRAM), a static RAM (SRAM), a dynamic RAM (DRAM), an RAM of another type, an ROM, an electrically-erasable programmable read-only memory (EEPROM), a flash memory or another memory technology, a compact disc ROM (CD-ROM), a digital versatile disc (DVD) or other optical memories, a magnetic cassette tape, a magnetic tape/disc storage or other magnetic storage devices or any other non-transmission medium, that may be configured to store information accessible by a computer device. According to the present invention, the computer-readable medium does not include a transitory computer-readable medium like a modulated data signal or a carrier.

In order to make the purpose, the technical solution and the advantages of the present invention clearer, some embodiments of the present invention will be explained below in detail with reference to the accompanying drawings and embodiments. It shall be noted that without conflict, embodiments and features in the embodiments in the present invention may be combined randomly.

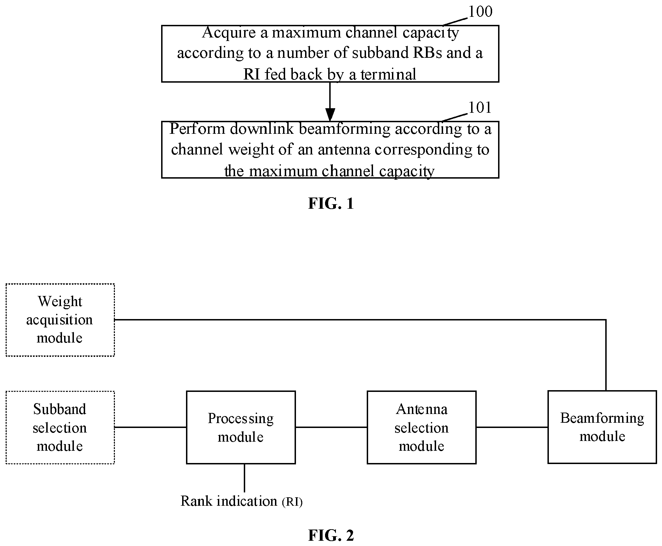

FIG. 1 is a schematic flowchart of a method for realizing beamforming. As shown in FIG. 1, the method includes the following operations.

In 100, a maximum channel capacity is acquired according to a number of subband RBs and an RI fed back by a terminal.

In an example, before this operation, there is the following operation.

The subband RBs are selected. The number of the subband RBs is denoted as N. Herein, N=4, or 8, or 16, or 32 or the like.

In an example, this operation may include the following operation.

In response to the RI being 2 or 3, for each of subbands, a channel capacity of a respective subband is computed according to the number of the respective subband RBs, and an antenna corresponding to the maximum channel capacity is taken as a beamforming antenna.

In an example, computing the channel capacity of the respective subband according to the number of the respective subband RBs includes the following operation.

Each of the RBs within the respective subband is traversed with a channel estimation value between every two antennas to compute the channel capacity of the respective subband.

In an example, in response to the RI being 2, there are 6 types of combinations of the antennas. Each of the RBs within the respective subband being traversed with the channel estimation value between every two antennas to compute the channel capacity of the respective subband may be realized based on the following formula (1):

$$\det\left\{ I + \frac{HR_{xx}H^H}{\sigma^2} \right\} = \det\left\{ I + SINR_{I_{2\times2}} \times \left( H_{i,j} \times H_{i,j}^H \right) \right\} = (1 + SINR_i \cdot a_{ii}) \cdot \left( 1 + SINR_j \cdot a_{jj} \right) - a_{ij} \cdot a_{ji}$$

$$(1)$$

Formula (1) expresses acquiring a determinant of an identity matrix I, a channel estimation value H, a diagonal matrix Rxx of the channel estimation value H, and a noise coefficient a. Herein, det is a determinant operator, and SINR is a signal to interference plus noise ratio.

In an example, in response to the RI being 3, there are 4 types of combinations of the antennas. Each of the RBs within the respective subband being traversed with a channel estimation value between every two antennas to compute the channel capacity of the respective subband may be realized based on the following formula (2):

$$\det\left\{I + \frac{HR_{xx}H^H}{\sigma^2}\right\} = \det\left\{I + SINR_{I_{3\times3}} \times \left(H_{i,j,k} \times H_{i,j,k}^H\right)\right\}$$

$$= (1 + SINR_i \cdot a_{ii}) \cdot \left(1 + SINR_j \cdot a_{jj}\right) \cdot (1 + SINR_k \cdot a_{kk}) + a_{i,j} \cdot a_{j,k} \cdot a_{k,i} + a_{i,k} \cdot a_{j,i} \cdot a_{k,j}$$

$$- a_{i,k} \cdot \left(1 + SINR_j \cdot a_{jj}\right) \cdot a_{k,i} - (1 + SINR_i \cdot a_{ii}) \cdot a_{j,k} \cdot a_{k,j} - (1 + SINR_k \cdot a_{kk}) \cdot a_{i,j} \cdot a_{j,i}$$

$$(2)$$

In 101, downlink beamforming is performed according to a channel weight of an antenna corresponding to the maximum channel capacity.

In an example, before this operation, there is the following operation.

Channel measurement is performed according to an uplink sounding reference signal (SRS) from a terminal to acquire the channel weight.

In an example, the method of the present invention further includes the following operation.

In response to the RI being 4, there is a full rank space division, and downlink beamforming is performed directly based on four ports.

In an example, the method of the present invention further includes the following operation.

In response to the RI being 1, a respective SINR of an SRS at each port is computed according to the number of the subband RBs. A port having a maximum SINR is selected to perform downlink beamforming.

Herein, SINR is a ratio of a strength of a received useful signal to a strength of a received interference signal (i.e., interference plus noise).

An uplink SRS of a respective user-end (UE) is placed in a last block of a subframe. A frequency domain interval of the SRS is two equivalent subcarriers. Therefore, an interference to an SRS of a UE is from an SRS of another UE. Therefore, in an example, computing a respective SINR of an SRS at each port may include: SINR=SRS reception power/(interference power+noise power). Herein, the SRS reception power is a value of a product of an SRS transmission power and a link loss. The interference power is a sum of SRS reception powers of all UEs in adjacent cells.

In an example, the method of the present invention further includes the following operation.

All downlink subbands are traversed in sequence, and the method shown in FIG. 1 is repetitively performed to realize maximum downlink traffic.

In an example, a principle of downlink beamforming is as follows. Channel measurement is performed according to an uplink SRS from a terminal to acquire a channel weight. During downlink domain frequency data resource mapping, the channel weight is multiplied with an estimated weight of the terminal. In this way, a downlink data may point to a corresponding terminal more accurately to acquire a larger quantity of traffic.

According to the embodiments of the present invention, a maximum channel capacity is acquired according to a number of subband RBs and an RI fed back by a terminal; and downlink beamforming is performed according to a channel weight of an antenna corresponding to the maximum channel capacity. In the embodiments of the present invention, antenna selection traversing is performed on subbands based on channel capacity, and beamforming is performed on the antenna corresponding to the maximum channel capacity. This guarantees that the antenna acquires a largest gain and improves a downlink quantity of traffic and a user's experience.

In an example, in response to the RI being 1, downlink beamforming is performed on a port having a maximum SINR according to the number of the subband RBs and according to a respective SINR of an SRS at each port. This guarantees that the antenna acquires a largest gain and improves a downlink quantity of traffic and a user's experience.

Some embodiments of the present invention further provide a computer-readable storage medium storing a computer-executable instruction to perform the method for realizing beamforming according to any one of the above embodiments.

Some embodiments of the present invention further provide a device for realizing beamforming, including a processor and a memory. Herein, a computer program capable of running in the processor is stored in the memory to perform an operation of the method for realizing beamforming according to any one of the above embodiments.

In the present invention, the device for realizing beamforming may be an independent entity or may be disposed in a base station.

FIG. 2 is a schematic diagram showing a structure of a device for realizing beamforming. As shown in FIG. 2, the device for realizing beamforming at least includes: a processing module, an antenna selection module and a beamforming module.

The processing module is configured to acquire a maximum channel capacity according to a number of subband RBs and an RI fed back by a terminal.

The antenna selection module is configured to determine that an antenna corresponding to the maximum channel capacity is a beamforming antenna.

The beamforming module is configured to perform downlink beamforming according to a channel weight of the antenna corresponding to the maximum channel capacity.

In an example, the device in the present invention further includes a subband selection module, configured to select subband RBs. The number of the subband RBs is denoted as N. Herein, N=4, or 8, or 16, or 32 or the like.

In an example, the device in the present invention further includes a weight acquisition module, configured to perform channel measurement according to an uplink SRS from a terminal to acquire a channel weight.

In an example, the processing module is specifically configured to perform the following.

In response to the RI being 2 or 3, for each of subbands, a channel capacity of a respective subband is computed according to the number of the respective subband RBs.

In an example, computing the channel capacity of the respective subband according to the number of the respective subband RBs includes the following.

Each of the RBs is traversed within the respective subband with a channel estimation value between every two antennas to compute the channel capacity of the respective subband.

In an example, in response to the RI being 2, there are 6 types of combinations of the antennas. The channel capacity of the respective subband may be computed based on the following formula (1):

$$\det\left\{I + \frac{HR_{xx}H^H}{\sigma^2}\right\} = \det\{I + SINR_{I_{2\times2}} \times (H_{i,j} \times H_{i,j}^H)\} = (1 + SINR_i \cdot a_{ii}) \cdot (1 + SINR_j \cdot a_{jj}) - a_{ij} \cdot a_{ji} \quad (1)$$

Formula (1) expresses acquiring a determinant of an identity matrix I, a channel estimation value H, a diagonal matrix Rxx of the channel estimation value H, and a noise coefficient a. Herein, det is a determinant operator, and SINR is a signal to interference plus noise ratio.

In an example, in response to the RI being 3, there are 4 types of combinations of the antennas. The channel capacity of the respective subband may be computed based on the following formula (2):

$$\det\left\{I + \frac{HR_{xx}H^H}{\sigma^2}\right\} = \det\{I + SINR_{I_{3\times3}} \times (H_{i,j,k} \times H_{i,j,k}^H)\}$$

$$= (1 + SINR_i \cdot a_{ii}) \cdot (1 + SINR_j \cdot a_{jj}) \cdot (1 + SINR_k \cdot a_{kk}) + a_{i,j} \cdot a_{j,k} \cdot a_{k,i} + a_{i,k} \cdot a_{j,i} \cdot a_{k,j}$$

$$- a_{i,k} \cdot (1 + SINR_j \cdot a_{jj}) \cdot a_{k,i} - (1 + SINR_i \cdot a_{ii}) \cdot a_{j,k} \cdot a_{k,j} - (1 + SINR_k \cdot a_{kk}) \cdot a_{i,j} \cdot a_{j,i}$$

$$(2)$$

In an example, the processing module is further configured to: in response to the RI being 1, compute a respective SINR of an SRS at each port according to the number of the respective subband RBs.

Correspondingly, the antenna selection module is configured to select a port having a maximum SINR as a port for performing downlink beamforming.

The beamforming module is further configured to perform downlink beamforming on the port having the maximum SINR.

In an example, the processing module is further configured to perform full rank space division in response to the RI being 4.

Correspondingly, the antenna selection module is configured to select four ports as ports for downlink beamforming.

The beamforming module is further configured to perform downlink beamforming on the four ports.

In the present invention, the device for realizing beamforming may be an independent entity or may be disposed in a base station.

Detailed description is provided in the following with specific embodiments.

In a first embodiment, the number of subband RBs is selected according to a system band width. In this embodiment, every 16 RBs as one subband is taken as an example.

In response to the RI being 4, there is a full rank space division, and downlink beamforming is performed directly based on four ports.

In response to the RI being 1, based on every 16 RBs as one subband, a respective SINR of an SRS at each port is computed. Downlink beamforming with a downlink subband of 16RBs is performed on a port having a maximum SINR obtained through computation.

In response to the RI being 2, based on every 16 RBs as one subband, traversing is performed to select antennas for beamforming. There are 6 types of combinations. It is supposed that an SRS channel estimation value of each stream is $H_i = \begin{bmatrix} h_1^i & h_2^i & \cdots & h_{64}^i \end{bmatrix}$, and then mutual information of four streams is shown as follows:

$$HH_{4\times 4}^H = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix} H = \begin{bmatrix} H_1 H_1^H & H_1 H_2^H & H_1 H_3^H & H_1 H_4^H \\ H_2 H_1^H & H_2 H_2^H & H_2 H_3^H & H_2 H_4^H \\ H_3 H_1^H & H_3 H_2^H & H_3 H_3^H & H_3 H_4^H \\ H_4 H_1^H & H_4 H_2^H & H_4 H_3^H & H_4 H_4^H \end{bmatrix}$$

Herein, H denotes a channel estimation value, $H_1$ denotes a channel estimation value of antenna 1, and $H^H$ denotes a conjugate transpose of H.

In response to selecting 2 from 4, there are the following 6 types of combinations:

$$H_{i,j} H_{i,j}^H = \begin{cases} H_{1,2} H_{1,2}^H = \begin{bmatrix} H_1 H_1^H & H_1 H_2^H \\ H_2 H_1^H & H_2 H_2^H \end{bmatrix} = \begin{bmatrix} a_{11} & a_{12} \\ a_{21} & a_{22} \end{bmatrix} \\[2em] H_{1,3} H_{1,3}^H = \begin{bmatrix} H_1 H_1^H & H_1 H_3^H \\ H_3 H_1^H & H_3 H_3^H \end{bmatrix} = \begin{bmatrix} a_{11} & a_{13} \\ a_{31} & a_{33} \end{bmatrix} \\[2em] H_{1,4} H_{1,4}^H = \begin{bmatrix} H_1 H_1^H & H_1 H_4^H \\ H_4 H_1^H & H_4 H_4^H \end{bmatrix} = \begin{bmatrix} a_{11} & a_{14} \\ a_{41} & a_{44} \end{bmatrix} \\[2em] H_{2,3} H_{2,3}^H = \begin{bmatrix} H_2 H_2^H & H_2 H_3^H \\ H_3 H_2^H & H_3 H_3^H \end{bmatrix} = \begin{bmatrix} a_{22} & a_{23} \\ a_{32} & a_{33} \end{bmatrix} \\[2em] H_{2,4} H_{2,4}^H = \begin{bmatrix} H_2 H_2^H & H_2 H_4^H \\ H_4 H_2^H & H_4 H_4^H \end{bmatrix} = \begin{bmatrix} a_{22} & a_{24} \\ a_{42} & a_{44} \end{bmatrix} \\[2em] H_{3,4} H_{3,4}^H = \begin{bmatrix} H_3 H_3^H & H_3 H_4^H \\ H_4 H_3^H & H_4 H_4^H \end{bmatrix} = \begin{bmatrix} a_{33} & a_{34} \\ a_{43} & a_{44} \end{bmatrix} \end{cases}$$

In the first embodiment, it is supposed that correlation between signals at a transmission terminal is 0, then $R_{xx} = I_{2\times 2}$. Herein, I is an identity matrix, Rxx is a diagonal matrix of a channel estimation value H, and an additive noise at a reception terminal is regarded as a Gaussian white noise and has the same power. Therefore, a channel capacity computation formula is shown as formula (1):

$$\det\left\{I + \frac{HR_{xx}H^H}{\sigma^2}\right\} = \det\left\{I + SINR_{I_{2\times 2}} \times (H_{i,j} \times H_{i,j}^H)\right\} = (1 + SINR_i \cdot a_{ii}) \cdot (1 + SINR_j \cdot a_{jj}) - a_{ij} \cdot a_{ji} \quad (1)$$

According formula (1), it is easy to obtain a maximum channel capacity of the respective subband of 16RBs. In this way, downlink beamforming is performed according to a channel weight of an antenna corresponding to the maximum channel capacity.

In response to the RI being 3, based on every16 RBs as one subband, traversing is performed to select antennas for beamforming. There are 4 types of combinations of the antennas. Similarly, it is supposed that an SRS channel estimation value of each stream is $H_i = \begin{bmatrix} h_1^i & h_2^i & \cdots & h_{64}^i \end{bmatrix}$, and then mutual information of four streams is shown as follows:

$$HH_{4\times 4}^H = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix} = \begin{bmatrix} H_1 H_1^H & H_1 H_2^H & H_1 H_3^H & H_1 H_4^H \\ H_2 H_1^H & H_2 H_2^H & H_2 H_3^H & H_2 H_4^H \\ H_3 H_1^H & H_3 H_2^H & H_3 H_3^H & H_3 H_4^H \\ H_4 H_1^H & H_4 H_2^H & H_4 H_3^H & H_4 H_4^H \end{bmatrix}$$

In response to selecting 3 from 4, there are the following 4 types of combinations:

$$
H_{i,j,k}H_{i,j,k}^H = \begin{cases} H_{1,2,3}H_{1,2,3}^H = \begin{bmatrix} H_1H_1^H & H_1H_2^H & H_1H_3^H \\ H_2H_1^H & H_2H_2^H & H_2H_3^H \\ H_3H_1^H & H_3H_2^H & H_3H_3^H \end{bmatrix} = \begin{bmatrix} a_{11} & a_{12} & a_{13} \\ a_{21} & a_{22} & a_{23} \\ a_{31} & a_{32} & a_{33} \end{bmatrix} \\[12pt]
H_{1,2,4}H_{1,2,4}^H = \begin{bmatrix} H_1H_1^H & H_1H_2^H & H_1H_4^H \\ H_2H_1^H & H_2H_2^H & H_2H_4^H \\ H_4H_1^H & H_4H_2^H & H_4H_4^H \end{bmatrix} = \begin{bmatrix} a_{11} & a_{12} & a_{14} \\ a_{21} & a_{22} & a_{24} \\ a_{41} & a_{42} & a_{44} \end{bmatrix} \\[12pt]
H_{1,3,4}H_{1,3,4}^H = \begin{bmatrix} H_1H_1^H & H_1H_2^H & H_1H_4^H \\ H_3H_1^H & H_3H_3^H & H_3H_4^H \\ H_4H_1^H & H_4H_3^H & H_4H_4^H \end{bmatrix} = \begin{bmatrix} a_{11} & a_{13} & a_{14} \\ a_{31} & a_{33} & a_{34} \\ a_{41} & a_{43} & a_{44} \end{bmatrix} \\[12pt]
H_{2,3,4}H_{2,3,4}^H = \begin{bmatrix} H_2H_2^H & H_2H_3^H & H_2H_4^H \\ H_3H_2^H & H_3H_3^H & H_3H_4^H \\ H_4H_2^H & H_4H_3^H & H_4H_4^H \end{bmatrix} = \begin{bmatrix} a_{22} & a_{23} & a_{24} \\ a_{32} & a_{33} & a_{34} \\ a_{41} & a_{43} & a_{44} \end{bmatrix} \end{cases}
$$

In the first embodiment, it is supposed that correlation between signals at the transmission terminal is 0, then $R_{xx} = I_{2\times2}$. The additive noise at the reception terminal is regarded as the Gaussian white noise and has the same power. Therefore, a channel capacity computation formula is shown as formula (2):

$$
\det\left\{I + \frac{HR_{xx}H^H}{\sigma^2}\right\} = \det\left\{I + SINR_{I_{3\times3}} \times \left(H_{i,j,k} \times H_{i,j,k}^H\right)\right\}
$$

$$
= (1 + SINR_i \cdot a_{ii}) \cdot (1 + SINR_j \cdot a_{jj}) \cdot (1 + SINR_k \cdot a_{kk}) + a_{i,j} \cdot a_{j,k} \cdot a_{k,i} + a_{i,k} \cdot a_{j,i} \cdot a_{k,j}
$$

$$
- a_{i,k} \cdot (1 + SINR_j \cdot a_{jj}) \cdot a_{k,i} - (1 + SINR_i \cdot a_{ii}) \cdot a_{j,k} \cdot a_{k,j} - (1 + SINR_k \cdot a_{kk}) \cdot a_{i,j} \cdot a_{j,i}
$$

$$(2)$$

According formula (2), it is easy to obtain a maximum channel capacity of the respective subband of 16RBs. In this way, downlink beamforming is performed according to a channel weight of an antenna corresponding to the maximum channel capacity.

In this embodiment, all downlink subbands are traversed in sequence, and the above implementation is repetitively performed to realize maximum downlink traffic.

In a second embodiment, a number of subband RBs is selected according to a system band width. In this embodiment, every 4 RBs as one subband is taken as an example.

In response to an RI being 4, there is a full rank space division, and downlink beamforming is performed directly based on four ports.

In response to the RI being 1, based on every 4 RBs as one subband, a respective SINR of an SRS at each port is computed. Downlink beamforming with a downlink subband of 4RBs is performed on a port having a maximum SINR obtained through computation.

In response to the RI being 2, based on every 4 RBs as one subband, traversing is performed to select antennas for beamforming. There are 6 types of combinations of the antennas. It is supposed that an SRS channel estimation value of each stream is $H_i = \begin{bmatrix} h_1^i & h_2^i & \cdots & h_{64}^i \end{bmatrix}$, and then mutual information of four streams is shown as follows:

$$
HH_{4\times4}^H = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix} H = \begin{bmatrix} H_1H_1^H & H_1H_2^H & H_1H_3^H & H_1H_4^H \\ H_2H_1^H & H_2H_2^H & H_2H_3^H & H_2H_4^H \\ H_3H_1^H & H_3H_2^H & H_3H_3^H & H_3H_4^H \\ H_4H_1^H & H_4H_2^H & H_4H_3^H & H_4H_4^H \end{bmatrix}
$$

In response to selecting 2 from 4, there are the following 6 types of combinations:

$$
H_{i,j}H_{i,j}^H = \begin{cases}
H_{1,2}H_{1,2}^H = \begin{bmatrix} H_1H_1^H & H_1H_2^H \\ H_2H_1^H & H_2H_2^H \end{bmatrix} = \begin{bmatrix} a_{11} & a_{12} \\ a_{21} & a_{22} \end{bmatrix} \\[1em]
H_{1,3}H_{1,3}^H = \begin{bmatrix} H_1H_1^H & H_1H_3^H \\ H_3H_1^H & H_3H_3^H \end{bmatrix} = \begin{bmatrix} a_{11} & a_{13} \\ a_{31} & a_{33} \end{bmatrix} \\[1em]
H_{1,4}H_{1,4}^H = \begin{bmatrix} H_1H_1^H & H_1H_4^H \\ H_4H_1^H & H_4H_4^H \end{bmatrix} = \begin{bmatrix} a_{11} & a_{14} \\ a_{41} & a_{44} \end{bmatrix} \\[1em]
H_{2,3}H_{2,3}^H = \begin{bmatrix} H_2H_2^H & H_2H_3^H \\ H_3H_2^H & H_3H_3^H \end{bmatrix} = \begin{bmatrix} a_{22} & a_{23} \\ a_{32} & a_{33} \end{bmatrix} \\[1em]
H_{2,4}H_{2,4}^H = \begin{bmatrix} H_2H_2^H & H_2H_4^H \\ H_4H_2^H & H_4H_4^H \end{bmatrix} = \begin{bmatrix} a_{22} & a_{24} \\ a_{42} & a_{44} \end{bmatrix} \\[1em]
H_{3,4}H_{3,4}^H = \begin{bmatrix} H_3H_3^H & H_3H_4^H \\ H_4H_3^H & H_4H_4^H \end{bmatrix} = \begin{bmatrix} a_{33} & a_{34} \\ a_{43} & a_{44} \end{bmatrix}
\end{cases}
$$

In the second embodiment, it is supposed that correlation between signals at a transmission terminal is 0, then $R_{xx} = I_{2\times2}$. An additive noise at a reception terminal is regarded as a Gaussian white noise and has the same power. Therefore, a channel capacity computation formula is shown as formula (1):

$$
\det\left\{I + \frac{HR_{xx}H^H}{\sigma^2}\right\} = \det\left\{I + SINR_{I_{2\times2}} \times \left(H_{i,j} \times H_{i,j}^H\right)\right\}
$$

$$
= (1 + SINR_i \cdot a_{ii}) \cdot \left(1 + SINR_j \cdot a_{jj}\right) - a_{ij} \cdot a_{ji} \qquad (1)
$$

According formula (1), it is easy to obtain a maximum channel capacity of the respective subband of 4RBs. In this way, downlink beamforming is performed according to a channel weight of an antenna corresponding to the maximum channel capacity.

In response to the RI being 3, based on every 16 RBs as one subband, traversing is performed to select antennas for beamforming. There are 4 types of combinations of the antennas. Similarly, it is supposed that an SRS channel estimation value of each stream is $H_i = \begin{bmatrix} h_1^i & h_2^i & \cdots & h_{64}^i \end{bmatrix}$, and then mutual information of four streams are shown as follows:

$$
HH_{4\times4}^H = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix} = \begin{bmatrix} H_1H_1^H & H_1H_2^H & H_1H_3^H & H_1H_4^H \\ H_2H_1^H & H_2H_2^H & H_2H_3^H & H_2H_4^H \\ H_3H_1^H & H_3H_2^H & H_3H_3^H & H_3H_4^H \\ H_4H_1^H & H_4H_2^H & H_4H_3^H & H_4H_4^H \end{bmatrix}
$$

In response to selecting 3 from 4, there are the following 4 types of combinations:

$$H_{i,j,k}H_{i,j,k}^H = \begin{cases} H_{1,2,3}H_{1,2,3}^H = \begin{bmatrix} H_1H_1^H & H_1H_2^H & H_1H_3^H \\ H_2H_1^H & H_2H_2^H & H_2H_3^H \\ H_3H_1^H & H_3H_2^H & H_3H_3^H \end{bmatrix} = \begin{bmatrix} a_{11} & a_{12} & a_{13} \\ a_{21} & a_{22} & a_{23} \\ a_{31} & a_{32} & a_{33} \end{bmatrix} \\[2em] H_{1,2,4}H_{1,2,4}^H = \begin{bmatrix} H_1H_1^H & H_1H_2^H & H_1H_4^H \\ H_2H_1^H & H_2H_2^H & H_2H_4^H \\ H_4H_1^H & H_4H_2^H & H_4H_4^H \end{bmatrix} = \begin{bmatrix} a_{11} & a_{12} & a_{14} \\ a_{21} & a_{22} & a_{24} \\ a_{41} & a_{42} & a_{44} \end{bmatrix} \\[2em] H_{1,3,4}H_{1,3,4}^H = \begin{bmatrix} H_1H_1^H & H_1H_2^H & H_1H_4^H \\ H_3H_1^H & H_3H_3^H & H_3H_4^H \\ H_4H_1^H & H_4H_3^H & H_4H_4^H \end{bmatrix} = \begin{bmatrix} a_{11} & a_{13} & a_{14} \\ a_{31} & a_{33} & a_{34} \\ a_{41} & a_{43} & a_{44} \end{bmatrix} \\[2em] H_{2,3,4}H_{2,3,4}^H = \begin{bmatrix} H_2H_2^H & H_2H_3^H & H_2H_4^H \\ H_3H_2^H & H_3H_3^H & H_3H_4^H \\ H_4H_2^H & H_4H_3^H & H_4H_4^H \end{bmatrix} = \begin{bmatrix} a_{22} & a_{23} & a_{24} \\ a_{32} & a_{33} & a_{34} \\ a_{41} & a_{43} & a_{44} \end{bmatrix} \end{cases}$$

In the second embodiment, it is supposed that correlation between signals at the transmission terminal is 0, then $R_{xx} = I_{2\times2}$. The additive noise at the reception terminal is regarded as the Gaussian white noise and has the same power. Therefore, a channel capacity computation formula is shown as formula (2):

$$\det\left\{I + \frac{HR_{xx}H^H}{\sigma^2}\right\} = \det\{I + SINR_{I_{3\times3}} \times (H_{i,j,k} \times H_{i,j,k}^H)\}$$

$$= (1 + SINR_i \cdot a_{ii}) \cdot (1 + SINR_j \cdot a_{jj}) \cdot (1 + SINR_k \cdot a_{kk}) + a_{i,j} \cdot a_{j,k} \cdot a_{k,i} + a_{i,k} \cdot a_{j,i} \cdot a_{k,j}$$

$$- a_{i,k} \cdot (1 + SINR_j \cdot a_{jj}) \cdot a_{k,i} - (1 + SINR_i \cdot a_{ii}) \cdot a_{j,k} \cdot a_{k,j} - (1 + SINR_k \cdot a_{kk}) \cdot a_{i,j}$$

$$\cdot a_{j,i} \qquad (2)$$

According formula (2), it is easy to obtain a maximum channel capacity of the respective subband of 4RBs. In this way, downlink beamforming is performed according to a channel weight of an antenna corresponding to the maximum channel capacity.

In this embodiment, all downlink subbands are traversed in sequence, and the above implementation is repetitively performed to realize maximum downlink traffic.

The embodiments are preferable examples of the present invention and do not mean to limit the protection scope of the present invention. Any amendment, substitution and improvement made within the spirit and principle of the present invention shall be included in the protection scope of the present invention.

**Claims**

1. A method for realizing beamforming, comprising:

   acquiring a maximum channel capacity according to a number of subband resource blocks, RBs, and a rank indication, RI, fed back by a terminal; and
   performing downlink beamforming according to a channel weight of an antenna corresponding to the maximum channel capacity.

2. The method according to claim 1, wherein in response to the RI being 2 or 3, acquiring the maximum channel capacity comprises:
   for each of subbands, computing a channel capacity of a respective subband according to a number of a respective subband RBs, and taking the antenna corresponding to the maximum channel capacity as a beamforming antenna.

3. The method according to claim 2, wherein computing the channel capacity of the respective subband according to the number of the respective subband RBs comprises:
   traversing each of the RBs within the respective subband with a channel estimation value between each two antennas to compute the channel capacity of the respective subband.

4. The method according to any one of claims 1-3, further comprising:
traversing all downlink subbands in sequence, and repetitively performing operations of acquiring the maximum channel capacity and performing downlink beamforming according to the channel weight of the antenna corresponding to the maximum channel capacity, to realize maximum downlink traffic.

5. The method according to claim 1, before performing downlink beamforming according to the channel weight of the antenna corresponding to the maximum channel capacity, further comprising:
performing channel measurement according to sounding reference signal, SRS, from a terminal through an uplink channel, to acquire the channel weight.

6. The method according to claim 1, wherein in response to the RI being 1, the method further comprises:

computing a signal to interference plus noise ratio, SINR, of a sounding reference signal, SRS, at each port according to a number of a respective subband RBs; and
selecting a port having a maximum SINR obtained through computation to perform downlink beamforming.

7. The method according to claim 1, wherein in response to the RI being 4, the method further comprises:
performing downlink beamforming on four ports.

8. A computer-readable storage medium storing a computer-executable instruction to perform the method for realizing beamforming according to any one of claims 1 to 7.

9. A device for realizing beamforming, comprising a processor and a memory, wherein a computer program capable of running in the processor is stored in the memory to perform an operation of the method for realizing beamforming according to any one of claims 1 to 7.

10. A device for realizing beamforming, comprising a processing module, an antenna selection module and a beamforming module, wherein

the processing module is configured to acquire a maximum channel capacity according to a number of subband resource blocks, RBs, and a rank indication, RI, fed back by a terminal;
the antenna selection module is configured to determine that an antenna corresponding to the maximum channel capacity is a beamforming antenna; and
the beamforming module is configured to perform downlink beamforming according to a channel weight of the antenna corresponding to the maximum channel capacity.

```
                                                          ┌ 100
┌────────────────────────────────────────────────────┐
│       Acquire a maximum channel capacity           │
│    according to a number of subband RBs and a      │
│            RI fed back by a terminal               │
└────────────────────────────────────────────────────┘
                          │
                          ▼                    ┌ 101
┌────────────────────────────────────────────────────┐
│  Perform downlink beamforming according to a       │
│  channel weight of an antenna corresponding to     │
│         the maximum channel capacity               │
└────────────────────────────────────────────────────┘
```

**FIG. 1**

```
┌ ─ ─ ─ ─ ─ ┐
│  Weight   │
│acquisition│────────────────────────────────────────────────────────┐
│  module   │                                                         │
└ ─ ─ ─ ─ ─ ┘                                                         │
                                                                      │
┌ ─ ─ ─ ─ ─ ┐     ┌──────────┐     ┌──────────┐     ┌──────────┐
│  Subband  │     │          │     │ Antenna  │     │          │
│ selection │─────│Processing│─────│selection │─────│Beamforming│
│  module   │     │  module  │     │  module  │     │  module  │
└ ─ ─ ─ ─ ─ ┘     └──────────┘     └──────────┘     └──────────┘
                       │
                       │
              Rank indication (RI)
```

**FIG. 2**

## INTERNATIONAL SEARCH REPORT

| International application No. |
|---|
| **PCT/CN2020/089640** |

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

H04B; H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 波束赋形, 秩, 信道, 估计, 加权, 权值, 容量, 最大, 资源块, 子带; RB, RI, SRS, SINR, beamform, antenna, rank, resource block, max, channel, estimate

### C. DOCUMENTS CONSIDERED TO BE RELEVANT

| Category* | Citation of document, with indication, where appropriate, of the relevant passages | Relevant to claim No. |
|---|---|---|
| X | WO 2019061260 A1 (HUAWEI TECHNOLOGIES CO., LTD.) 04 April 2019 (2019-04-04) description, pages 5-10 | 1-10 |
| X | WO 2017206527 A1 (HUAWEI TECHNOLOGIES CO., LTD.) 07 December 2017 (2017-12-07) description, pages 4-11 | 1-10 |
| A | CN 106452544 A (SHANGHAI HUAWEI TECHNOLOGIES CO., LTD.) 22 February 2017 (2017-02-22) entire document | 1-10 |
| A | US 2016080052 A1 (SAMSUNG ELECTRONICS CO., LTD.) 17 March 2016 (2016-03-17) entire document | 1-10 |
| A | NTT Docomo. "Capacity enhancement of DL MU-MIMO with increased feedback bits for single point transmission scenarios" *3GPP TSG RAN WG1 Meeting #66bis R1-113293*, 14 October 2011 (2011-10-14), entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2020** | **11 August 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/089640**

**C.    DOCUMENTS CONSIDERED TO BE RELEVANT**

| Category* | Citation of document, with indication, where appropriate, of the relevant passages | Relevant to claim No. |
|---|---|---|
| A | CATT. "Views on the Scope of LTE/NR MIMO"<br>*3GPP TSG-RAN #79 RP-180224*, 22 March 2018 (2018-03-22),<br>     entire document | 1-10 |

Form PCT/ISA/210 (second sheet) (January 2015)

**INTERNATIONAL SEARCH REPORT**
Information on patent family members

International application No.

**PCT/CN2020/089640**

| Patent document cited in search report | | | Publication date (day/month/year) | Patent family member(s) | | | Publication date (day/month/year) |
|---|---|---|---|---|---|---|---|
| WO | 2019061260 | A1 | 04 April 2019 | CN | 111095809 | A | 01 May 2020 |
| WO | 2017206527 | A1 | 07 December 2017 | CN | 105959046 | A | 21 September 2016 |
| CN | 106452544 | A | 22 February 2017 | None | | | |
| US | 2016080052 | A1 | 17 March 2016 | WO | 2016039604 | A1 | 17 March 2016 |
| | | | | KR | 20170053637 | A | 16 May 2017 |

Form PCT/ISA/210 (patent family annex) (January 2015)

**EP 3 968 537 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910543199